(19) Europäisches Patentamt
European Patent Office
Office européen des brevets

(11) **EP 2 642 319 B1**

(12) **FASCICULE DE BREVET EUROPEEN**

(45) Date de publication et mention de la délivrance du brevet:
**22.04.2020 Bulletin 2020/17**

(51) Int Cl.:
***G01S 19/36*** *(2010.01)* ***G01S 19/14*** *(2010.01)*

(21) Numéro de dépôt: **13160296.3**

(22) Date de dépôt: **21.03.2013**

(54) **Dispositif de réception de signaux de radio-navigation à antennes multiples et asservissement de synchronisation commun**

Empfangsvorrichtung für Funknavigationssignale mit Mehrfachantennen, und gemeinsame Synchronisationssteuerung

Device for receiving radio-navigation signals with multiple antennas and common synchronisation control

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2012 FR 1200855**

(43) Date de publication de la demande:
**25.09.2013 Bulletin 2013/39**

(73) Titulaire: **Thales**
**92400 Courbevoie (FR)**

(72) Inventeurs:
• **Martin, Nicolas**
**26500 Bourg les Valence (FR)**
• **Chopard, Vincent**
**07300 Tournon sur Rhône (FR)**
• **Depraz, David**
**26000 Valence (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**GB-B- 2 367 199    US-A1- 2010 328 155**

• **PATRICK C. FENTON ET AL: "Using GPS For Position& Attitude Determination Of The Canadian Space Agency's Active Rocket Mission", PROC. OF ION GPS 98, 15 septembre 1998 (1998-09-15), pages 1791-1800, XP055054247, Nashville, TN, USA**
• **JOSÉ M. BLAS ET AL: "A Low Cost GPS Adaptive Antenna Array", PROCEEDINGS OF THE 1999 NATIONAL TECHNICAL MEETING OF THE INSTITUTE OF NAVIGATION, 25 janvier 1999 (1999-01-25), pages 751-757, XP055054249, San Diego, CA, USA**

**Description**

La présente invention a pour objet un dispositif de réception de signaux de radio-navigation multi-antennes.

Le domaine de l'invention est celui des systèmes de radio-navigation par satellite connus sous l'acronyme systèmes GNSS (« Global Navigation Satellite System ») tels que les systèmes GPS ou GALILEO.

Plus précisément, l'invention concerne les récepteurs de signaux de radio-navigation comportant plusieurs antennes réceptrices.

Un récepteur GNSS peut être utilisé sur tout type de véhicule pour déterminer des informations sur sa position, sa vitesse et de façon générale fournir une aide au déplacement ou à la navigation.

En particulier, un tel récepteur peut être utilisé sur un lanceur spatial. L'utilisation d'un récepteur mono-antenne dans un tel cas d'application pose problème car la position verticale du fuselage de l'engin engendre un masquage d'une partie des satellites en vue par le corps du lanceur pour les antennes. Les signaux transmis par ces satellites ne seront alors pas reçus ou reçus avec une forte atténuation par le récepteur. De façon plus générale, le positionnement d'une antenne sur le corps d'un porteur de grande envergure pose le problème du masquage de tout ou partie des signaux de radio-navigation émis par les satellites en vue du porteur par le porteur lui-même.

Une solution permettant de résoudre le problème du masquage des signaux consiste à utiliser une antenne annulaire disposée sur la circonférence du fuselage du porteur. De cette façon, le signal émis par un satellite est en permanence reçu par au moins une partie de l'antenne. Cependant ce type d'antenne ne permet pas d'atteindre des performances satisfaisantes car elle produit une seule sortie de signal qui est construite de façon non optimale et qui engendre des pertes importantes en rapport signal à bruit.

On connait également d'autres solutions décrites par exemple dans la demande de brevet américaine US 2010/328155 ou dans la publication scientifique « Using GPS for position & attitude determination of the Canadian space agency's active rocket mission, Patrick Fenton et al. » mais ces solutions ne permettent pas de prendre en compte l'impact d'une perte de signal temporaire sur une ou plusieurs antennes du réseau.

L'invention permet de résoudre le problème précité en proposant une solution qui améliore les performances par rapport aux récepteurs connus. L'invention consiste à utiliser une pluralité d'antennes disposées sur la circonférence du fuselage de l'engin, à démoduler les signaux reçus par chaque antenne séparément puis à combiner les différents signaux démodulés ce qui revient à faire une formation de faisceau dans un diagramme d'antenne équivalent. L'invention ne nécessite alors qu'un seul asservissement de synchronisation pour l'ensemble des voies de démodulation.

L'invention a pour objet un dispositif de réception de signaux de radio-navigation par satellite, destiné à être disposé sur un porteur de grande envergure, comprenant une pluralité d'antennes réceptrices formant un réseau antennaire, pour chaque antenne et pour chaque satellite en vue dudit dispositif, des moyens de démodulation des signaux reçus comprenant des moyens de multiplication en phase avec une porteuse locale, des moyens de corrélation en temps avec un code local, des moyens d'intégration du signal corrélé en phase et en temps, un opérateur de contrôle numérique NCO porteuse apte à délivrer une phase de porteuse locale pour piloter la génération de la porteuse locale et un opérateur de contrôle numérique NCO code apte à délivrer une commande en temps pour piloter la génération du code local et une mesure de l'instant d'émission par le satellite du signal reçu, caractérisé en ce que ledit dispositif comprend en outre, pour chaque satellite, des moyens de suivi de synchronisation de la porteuse et du code comprenant :

- des moyens de formation de faisceau aptes à délivrer, à partir des signaux de sortie $Z_1$, $Z_2$ des moyens d'intégration, un unique signal formé $Z$ égal à la somme desdits signaux $Z_1$, $Z_2$ pondérés par des coefficients de pondération complexes égaux au produit du gain complexe $G_a$, en amplitude et phase, de l'antenne associée, dans la direction du satellite en tenant compte d'un masquage éventuel du satellite par le corps du porteur, avec un gain complexe correctif $G_{BL}$ du bras de levier entre le centre de phase de l'antenne et le centre de symétrie O du réseau antennaire,
- un discriminateur de code et un discriminateur de phase appliqués audit signal formé $Z$,
- un correcteur de boucle de code appliqué en sortie du discriminateur de code et apte à délivrer une correction en vitesse en entrée des opérateurs de contrôle numérique code,
- un correcteur de boucle de porteuse appliqué en sortie du discriminateur de phase et apte à délivrer une correction en vitesse en entrée des opérateurs de contrôle numérique porteuse,
- des moyens de calcul de la moyenne desdites mesures de l'instant d'émission par le satellite du signal reçu.

Selon un aspect particulier de l'invention, les antennes réceptrices sont positionnées sur la circonférence d'un porteur de forme sensiblement cylindrique.

Selon un autre aspect particulier de l'invention, le gain correctif $G_{BL}$ du bras de levier est déterminé par le calcul suivant $G_{BL} = \exp(j \, \Delta\varphi_{BL})$, où $\Delta\varphi_{BL} = 2\pi \cdot \Delta L_{BL} / \lambda$ est le déphasage induit par la différence de chemin optique $\Delta L_{BL}$ entre le centre de phase de l'antenne et le centre de symétrie O du réseau antennaire, $\lambda$ étant la longueur d'onde de la porteuse du signal reçu.

Selon un autre aspect particulier de l'invention, la différence de chemin optique $\Delta L_{BL}$ est déterminée en projetant le bras de levier r sur l'axe à vue entre le centre de symétrie O du réseau antennaire et le satellite.

Selon un autre aspect particulier de l'invention, les coordonnées du bras de levier r sont déterminées, dans un repère spatial fixe par rapport à la terre, à partir d'une mesure de l'attitude du porteur.

Dans une variante de réalisation, le dispositif selon l'invention comprend en outre, en entrée de chaque opérateur de contrôle numérique code et de chaque opérateur de contrôle numérique porteuse, un correcteur du bras de levier en vitesse qui consiste à compenser les sorties des correcteurs de boucle de code et de porteuse par la dérivée temporelle de la différence de chemin optique $\Delta L_{BL}$.

D'autres caractéristiques et avantages de la présente invention apparaîtront mieux à la lecture de la description qui suit en relation avec les dessins annexés qui représentent:

- La figure 1a, un schéma en vue de dessus et en coupe transversale de la disposition des antennes d'un récepteur selon l'invention sur le corps d'un porteur de type lanceur spatial, dans un mode de réalisation comprenant deux antennes uniquement,
- La figure 1b, une illustration du problème du masquage d'un satellite par le corps du porteur,
- La figure 2, un schéma de l'architecture fonctionnelle d'un récepteur selon l'invention comprenant deux antennes.

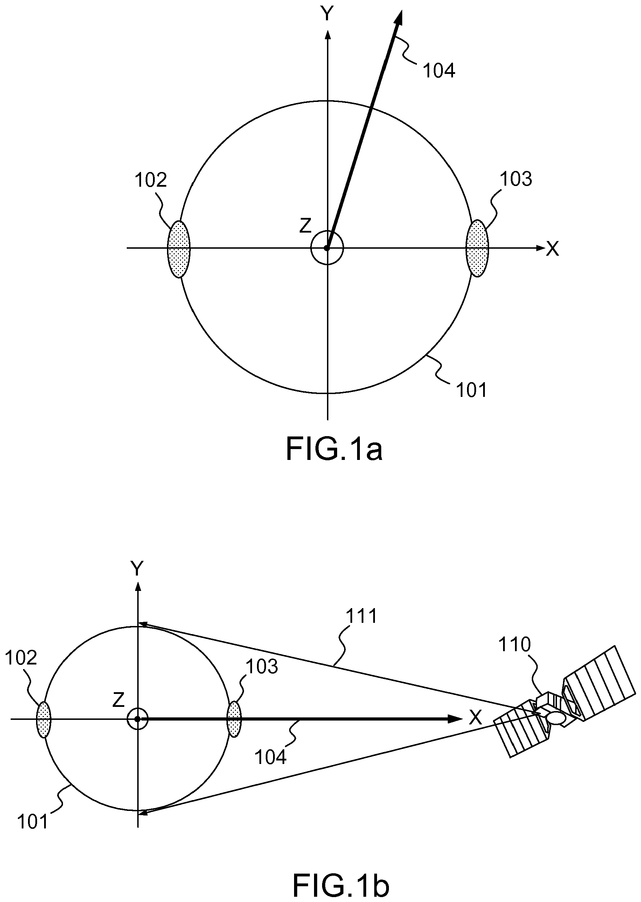

La figure 1a, schématise, en vue de dessus et en coupe transversale, un porteur 101 de forme sensiblement cylindrique avec deux antennes 102,103 réceptrices positionnées sur la circonférence du corps du porteur, par exemple de façon équiréparties. L'axe 104 représente l'axe à vue entre le récepteur GNSS selon l'invention, positionné sur le porteur 101, et un satellite de radio-navigation. L'axe 104 correspond à la direction de réception du signal de radio-navigation émis par un satellite. Selon l'orientation de l'axe à vue 104, le signal reçu par une antenne 102,103 peut être partiellement ou totalement masqué par le corps du porteur 101.

La figure 1a représente un exemple de réalisation du récepteur selon l'invention comprenant deux antennes, mais un nombre d'antennes quelconque, supérieur ou égal à deux, est également envisageable. Les antennes sont disposées préférentiellement sur la circonférence du porteur de façon équirépartie. Plus généralement les antennes sont agencées sur le corps du porteur de sorte qu'à chaque instant, au moins un satellite doit être en vue d'au moins une antenne sans que la totalité des signaux reçus soient masqués par le corps du porteur.

La figure 1b illustre un cas de masquage d'un signal de radionavigation 111 émis par un satellite 110. Le signal 111 est correctement reçu par l'antenne 103 disposée en vue du satellite mais n'est pas reçu par la seconde antenne 102 car masqué par le porteur 101.

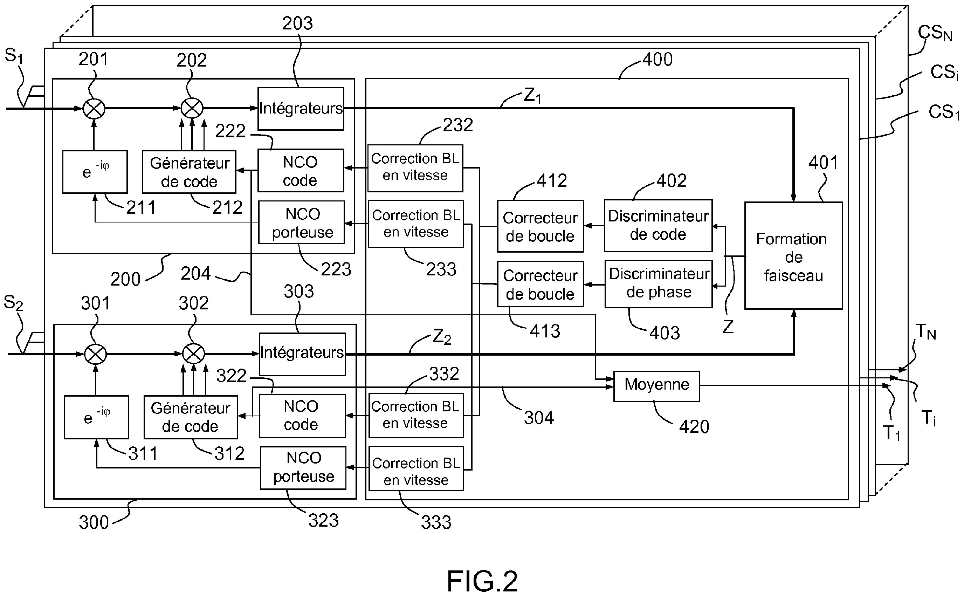

La figure 2 illustre sur un schéma l'architecture fonctionnelle d'un récepteur de signaux de radio-navigation selon l'invention comportant deux antennes (non représentées).

Un tel récepteur comporte plusieurs voies de réception $CS_1$, $CS_i$, ..., $CS_N$ pour chaque canal satellite, N étant égal au nombre de satellites de radio-navigation en vue du récepteur.

On décrit à présent les traitements mis en œuvre pour une voie de réception $CS_1$, ces traitements sont dupliqués pour chacune des autres voies de réception.

Une voie de démodulation 200, 300 est appliquée pour chaque signal $S_1$, $S_2$ reçu par chacune des deux antennes. Le signal reçu $S_1$, $S_2$ est démodulé en phase par multiplication 201, 301 avec une porteuse locale 211, 311 et est désétalé par corrélation 202, 302 avec un code local 212, 312.

La porteuse locale 211, 311 et le code local 212, 312 sont générés localement.

Le signal démodulé et désétalé est ensuite intégré par des moyens d'intégration cohérente 203, 303. L'ensemble constitué du multiplieur en phase 201,301.du multiplieur en code 202,302 et des moyens d'intégration 203,303 réalise une corrélation en phase et code du signal reçu avec la porteuse locale et le code local.

Pour synchroniser le code local et la porteuse locale sur le signal de radio-navigation émis par le satellite et reçu par l'antenne, il est connu d'utiliser une boucle de code et une boucle de porteuse par voie de démodulation.

La boucle de code sert à positionner un code local en phase avec le code contenu dans le signal satellite $S_1$, $S_2$ reçu, de manière à réaliser une corrélation donnant le maximum d'énergie.

La boucle de porteuse sert à asservir la fréquence ou la phase de la porteuse locale avec respectivement la fréquence ou la phase de la porteuse reçue, afin de maximiser le résultat de la corrélation.

La présence d'un signal en sortie d'intégration 203, 303 avec une amplitude importante, c'est-à-dire nettement supérieure à ce que donnerait le bruit ambiant en l'absence de signal reçu signifie que le code local et la porteuse locale sont synchronisés sur le signal reçu, ce qui permet de mesurer à chaque instant l'instant d'émission et la fréquence Doppler du signal reçu, par l'intermédiaire de la phase du code local et de la vitesse de la phase de la porteuse locale.

Au lieu d'appliquer un suivi de synchronisation du code et de la porteuse par le biais d'une boucle de porteuse et d'une boucle de code pour chaque voie de démodulation 200, 300, l'invention consiste à réaliser un unique suivi de synchronisation 400 pour toutes les voies de démodulation.

Pour cela, un module de formation de faisceau 401 réalise la somme cohérente des sorties complexes des intégrateurs 203, 303 de l'ensemble des voies de démodulation 200, 300 en tenant compte des déphasages relatifs entre les antennes de sorte à maximiser le gain total du signal dans la direction du satellite.

Pour l'exemple de la figure 2 qui se limite à deux antennes, le signal complexe $Z$ en sortie de formation de faisceau 401 est égal à la combinaison des sorties $Z_1$, $Z_2$ des intégrateurs 203, 303 :

$$Z = C_1 . Z_1 + C_2 . Z_2$$

Avec $Z_i = I_x + jQ_x$, i = 1 ou 2, $(I_x, Q_x)$ est le signal en sortie d'intégration pris en avance, retard ou ponctuel.

Le gain complexe $C_i$ est égal au produit du gain complexe $G_a$, en amplitude et phase, de l'antenne n°i dans la direction du satellite en tenant compte d'un masquage éventuel du satellite par le corps du porteur, avec le gain complexe $G_{BL}$ qui traduit la compensation du bras de levier entre le centre de phase de l'antenne n°i et le centre de symétrie O du réseau antennaire formé par l'ensemble des antennes.

De cette façon, une perte de signal sur une des antennes du récepteur ne pénalise pas le fonctionnement global car le signal de sortie $Z_1$, $Z_2$ de la voie de démodulation correspondante est pondéré en conséquence par le gain d'antenne dans le signal formé $Z$.

On a $G_{BL} = \exp(j \Delta\varphi_{BL})$, avec $\Delta\varphi_{BL} = 2\pi . \Delta L_{BL} / \lambda$ le déphasage induit par la différence de chemin optique $\Delta L_{BL}$ entre le centre de phase de l'antenne n°i et le centre de symétrie O du réseau antennaire formé par l'ensemble des antennes.

$\Delta L_{BL}$ est égal au produit scalaire entre le vecteur directeur u de l'axe à vue 104 du satellite et le bras de levier r reliant le centre de symétrie O au centre de phase de l'antenne. $\lambda$ est la longueur d'onde de la porteuse du signal de radio-navigation.

Les coordonnées du bras de levier r sont calculées dans un repère spatial fixe par rapport à la terre, tel le repère connu ECEF (« Earth Centred Earth Fixed »). Les coordonnées des antennes dans un repère ECEF sont obtenues grâce à une matrice de changement de repère fournie soit par un système de détermination de l'attitude du porteur externe à l'invention soit par un traitement de détermination d'attitude réalisé directement à partir des mesures des signaux reçus sur les différentes antennes.

La compensation du bras de levier $G_{BL}$ a pour effet de rendre cohérentes entre elles les mesures issues des différentes voies de démodulation 200,300 en prenant en compte la géométrie du réseau antennaire afin de se ramener à un signal unique $Z$ vu du centre de symétrie O.

De façon plus générale, si le récepteur comporte M antennes, le signal formé $Z$ est égal à la somme des signaux $Z_i$ de sortie des M intégrateurs que multiplient les gains complexes $C_i$ calculés comme expliqué ci-dessus pour le cas de deux antennes.

Le signal $Z$ formé est ensuite traité par une unique boucle de code et une unique boucle de porteuse.

La boucle de code est composée d'un discriminateur de code 402 qui délivre, à partir du signal formé $Z$, une information sur le décalage temporel entre le code du signal reçu et le code local et d'un filtre correcteur de boucle 412 qui produit, à partir de la sortie du discriminateur de code 402 une correction en vitesse qui est ensuite transmise à un opérateur de contrôle numérique 222,322, encore appelé NCO, qui transforme la commande en vitesse en une commande en temps qui vient piloter la génération du code local 212,312. Chaque chaîne de démodulation 200, 300 comporte un NCO code 222, 322.

A partir de la commande en temps fournie en sortie de l'opérateur de contrôle numérique 222, 322, une mesure 204, 304 de l'instant d'émission du signal par le satellite est produite pour chaque voie de démodulation 200, 300. Ces mesures 204, 304 sont ensuite moyennées 420 afin de délivrer une mesure unique $T_1$.

La boucle de porteuse sert à asservir la phase de la porteuse locale sur la phase de la porteuse reçue à modulo $2\pi$ près dans le but d'améliorer la précision de la mesure de code grâce à un lissage du code par la phase de la porteuse.

Une boucle de porteuse, encore appelée en terminologie anglo-saxonne PLL, signifiant Phase Lock Loop ou boucle à verrouillage de phase, utilise la voie de corrélation ponctuelle et asservit la phase de la porteuse locale sur la phase de la porteuse reçue par une rétro-action sur la phase locale. La boucle de porteuse comprend un discriminateur de phase 403 qui mesure l'écart entre la phase locale et la phase reçue et un correcteur de boucle 413 qui filtre la sortie du discriminateur de phase 403 et produit une correction en vitesse qui est ensuite transmise à un opérateur de contrôle numérique NCO porteuse 223, 323 qui transforme la commande en vitesse en une phase de porteuse locale qui vient piloter le générateur de porteuse 211, 311.

Sans sortir du cadre de l'invention, la boucle de porteuse peut également être réalisée par une boucle à verrouillage de fréquence.

Dans une variante de réalisation de l'invention, les moyens de suivi de synchronisation 400 comprennent en outre, pour chaque voie de démodulation 200, 300, un correcteur de bras de levier en vitesse 232, 332 pour la boucle de code et un autre correcteur de bras de levier en vitesse 233, 333 pour la boucle de porteuse.

La correction du bras de levier en vitesse consiste à calculer la dérivée de la différence de chemin optique $\Delta L_{BL}$ par rapport au temps et à compenser les sorties du correcteur de boucle de code 412 et du correcteur de boucle de porteuse 413 par cette dérivée.

**Revendications**

**1.** Dispositif de réception de signaux de radio-navigation par satellite, destiné à être disposé sur un porteur de grande envergure, comprenant une pluralité d'antennes réceptrices formant un réseau antennaire, pour chaque antenne et pour chaque satellite en vue dudit dispositif, des moyens de démodulation (200,300) des signaux reçus ($S_1$,$S_2$) comprenant des moyens de multiplication (201,301) en phase avec une porteuse locale (211,311), des moyens de corrélation en temps (202,302) avec un code local (212,312), des moyens d'intégration (203,303) du signal corrélé en phase et en temps, un opérateur de contrôle numérique NCO porteuse (223,323) apte à délivrer une phase de porteuse locale pour piloter la génération de la porteuse locale (211,311) et un opérateur de contrôle numérique NCO code (222,322) apte à délivrer une commande en temps pour piloter la génération du code local (212,312) et une mesure (204,304) de l'instant d'émission par le satellite du signal reçu ($S_1$,$S_2$), **caractérisé en ce que** ledit dispositif comprend en outre, pour chaque satellite, des moyens de suivi de synchronisation (400) de la porteuse et du code comprenant :

- des moyens de formation de faisceau (401) aptes à délivrer, à partir des signaux de sortie $Z_1$, $Z_2$ des moyens d'intégration (203,303), un unique signal formé Z égal à la somme desdits signaux $Z_1$, $Z_2$ pondérés par des coefficients de pondération complexes égaux au produit du gain complexe $G_a$, en amplitude et phase, de l'antenne associée, dans la direction du satellite en tenant compte d'un masquage éventuel du satellite par le corps du porteur, avec un gain complexe correctif $G_{BL}$ du bras de levier entre le centre de phase de l'antenne et le centre de symétrie O du réseau antennaire,
- un discriminateur de code (402) et un discriminateur de phase (403) appliqués audit signal formé Z,
- un correcteur de boucle de code (412) appliqué en sortie du discriminateur de code (402) et apte à délivrer une correction en vitesse en entrée des opérateurs de contrôle numérique code (222,322),
- un correcteur de boucle de porteuse (413) appliqué en sortie du discriminateur de phase (403) et apte à délivrer une correction en vitesse en entrée des opérateurs de contrôle numérique porteuse (223,323),
- des moyens (420) de calcul de la moyenne ($T_1$) desdites mesures (204,304) de l'instant d'émission par le satellite du signal reçu ($S_1$,$S_2$).

2. Dispositif de réception de signaux de radio-navigation selon la revendication 1 **caractérisé en ce que** les antennes réceptrices sont positionnées sur la circonférence d'un porteur de forme sensiblement cylindrique.

3. Dispositif de réception de signaux de radio-navigation selon l'une des revendications 1 ou 2 **caractérisé en ce que** le gain correctif $G_{BL}$ du bras de levier est déterminé par le calcul suivant $G_{BL} = \exp(j\,\Delta\varphi_{BL})$, où $\Delta\varphi_{BL} = 2\pi\,.\,\Delta L_{BL}\,/\,\lambda$ est le déphasage induit par la différence de chemin optique $\Delta L_{BL}$ entre le centre de phase de l'antenne et le centre de symétrie O du réseau antennaire, $\lambda$ étant la longueur d'onde de la porteuse du signal reçu.

4. Dispositif de réception de signaux de radio-navigation selon la revendication 3 **caractérisé en ce que** la différence de chemin optique $\Delta L_{BL}$ est déterminée en projetant le bras de levier r sur l'axe à vue (104) entre le centre de symétrie O du réseau antennaire et le satellite.

5. Dispositif de réception de signaux de radio-navigation selon la revendication 4 **caractérisé en ce que** les coordonnées du bras de levier r sont déterminées, dans un repère spatial fixe par rapport à la terre, à partir d'une mesure de l'attitude du porteur.

6. Dispositif de réception de signaux de radio-navigation selon l'une des revendications 1 à 5 **caractérisé en ce qu'**il comprend en outre, en entrée de chaque opérateur de contrôle numérique code (222,322) et de chaque opérateur de contrôle numérique porteuse (223,323), un correcteur du bras de levier en vitesse (232,233,332,333) qui consiste à compenser les sorties des correcteurs de boucle de code (412) et de porteuse (413) par la dérivée temporelle de la différence de chemin optique $\Delta L_{BL}$.

**Patentansprüche**

1. Empfangsvorrichtung für Funknavigationssignale über Satelliten, dazu bestimmt, auf einem Träger von großer Tragweite angeordnet zu sein, beinhaltend eine Vielzahl von Empfangsantennen, welche ein Antennennetz bilden, für jede Antenne und für jeden Satelliten in Sicht der Vorrichtung, Mittel zur Demodulation (200, 300) der empfangenen Signale ($S_1$, $S_2$), beinhaltend Multiplikationsmittel (201, 301) in Phase mit einem lokalen Träger (211, 311), Zeitkorrelationsmittel (202, 302) mit einem lokalen Code (212, 312), Mittel zur Integration (203, 303) des phasen- und zeitkorrelierten Signals, einen numerischen Steuerungsoperator NCO (223, 323), welcher in der Lage ist, eine lokale Trägerphase zum Steuern der Erzeugung des lokalen Trägers (211, 311) abzugeben und einen numerischen Steuerungsoperator NCO Code (222, 322), welche in der Lage ist, einen Zeitbefehl zum Steuern der Erzeugung des lokalen Codes (212, 312) und einer Messung (204, 304) des Zeitpunktes der Sendung durch den Satelliten des empfangenen Signals ($S_1$, $S_2$) abzugeben,

**dadurch gekennzeichnet, dass** die Vorrichtung zudem für jeden Satelliten Mittel zur Verfolgung der Synchronisierung (400) des Trägers und des Codes beinhaltet, Folgendes beinhaltend:

- Strahlbildungsmittel (401), welche in der Lage sind, anhand der Ausgangssignale $Z_1$, $Z_2$ der Integrationsmittel (203, 303), ein einziges gebildetes Signal Z abzugeben, welches gleich der Summe der Signale $Z_1$, $Z_2$ ist, welche mit komplexen Gewichtungskoeffizienten gewichtet sind, welche gleich dem Produkt der komplexen Verstärkung $G_a$, in Bezug auf Amplitude und Phase, der zugeordneten Antenne in der Richtung des Satelliten sind, unter Berücksichtigung einer eventuellen Verdeckung des Satelliten durch den Körper des Trägers, mit einer komplexen Korrekturverstärkung $G_{BL}$ des Hebelarms zwischen dem Phasenmittelpunkt der Antenne und dem Symmetriemittelpunkt O des Antennensystems,
- einen Code-Diskriminator (402) und einen Phasen-Diskriminator (403), welche auf das gebildete Signal Z angewandt werden,
- einen Code-Schleifen-Korrektor (412), welcher am Ausgang des Code-Diskriminators (402) angewandt wird und in der Lage ist, eine Geschwindigkeitskorrektur am Eingang der numerischen Code-Steuerungsoperatoren (222, 322) abzugeben,
- einen Träger-Schleifen-Korrektor (413), welcher am Ausgang des PhasenDiskriminators (403) angewandt wird und in der Lage ist, eine Geschwindigkeitskorrektur am Eingang der numerischen Träger-Steuerungsoperatoren (223, 323) abzugeben,
- Mittel (420) zum Berechnen des Mittelwertes ($T_1$) der Messungen (204, 304) des Zeitpunktes der Sendung, durch den Satelliten, des empfangenen Signals ($S_1$, $S_2$).

2. Empfangsvorrichtung für Funknavigationssignale nach Anspruch 1, **dadurch gekennzeichnet, dass** die Empfangsantennen am Umfang eines Trägers mit im Wesentlichen zylindrischer Form positioniert sind.

3. Empfangsvorrichtung für Funknavigationssignale nach einem der Ansprüche 1 oder 2, **dadurch gekennzeichnet, dass** die Korrekturverstärkung $G_{BL}$ des Hebelarms durch folgende Berechnung bestimmt wird: $G_{BL} = \exp(j \Delta\varphi_{BL})$, wobei $\Delta\varphi_{BL} = 2\pi \cdot \Delta L_{BL} / \lambda$ die durch die Strahlengangdifferenz $\Delta L_{BL}$ zwischen dem Phasenmittelpunkt der Antenne und dem Symmetriemittelpunkt O des Antennennetzes induzierte Phasenverschiebung ist, wobei $\lambda$ die Wellenlänge des Trägers des empfangenen Signals ist.

4. Empfangsvorrichtung für Funknavigationssignale nach Anspruch 3, **dadurch gekennzeichnet, dass** die Strahlengangdifferenz $\Delta L_{BL}$ durch Projizieren des Hebelarms r auf die Sichtachse (104) zwischen dem Symmetriemittelpunkt O des Antennennetzes und dem Satelliten bestimmt wird.

5. Empfangsvorrichtung für Funknavigationssignale nach Anspruch 4, **dadurch gekennzeichnet, dass** die Koordinaten des Hebelarms r in einem in Bezug auf die Erde festen räumlichen Koordinatensystem, anhand einer Messung der Fluglage des Trägers, bestimmt werden.

6. Empfangsvorrichtung für Funknavigationssignale nach einem der Ansprüche 1 bis 5, **dadurch gekennzeichnet, dass** es zudem, am Eingang eines jeden numerischen Code-Steuerungsoperators (222, 322) und eines jeden numerischen Träger-Steuerungsoperators (223, 323) einen Geschwindigkeits-Hebelarmkorrektor (232, 233, 332, 333) beinhaltet, der darin besteht, die Ausgänge der Codeschleifen-Korrektoren (412) und der Träger-Korrektoren (413) durch die zeitliche Ableitung der Strahlengangdifferenz $\Delta L_{BL}$ zu kompensieren.

**Claims**

1. Device for receiving satellite radio-navigation signals to be disposed on a carrier of large wingspan comprising a plurality of receiving antennas forming an antenna array, for each antenna and for each satellite in view of the said device, means for demodulating (200, 300) the signals received ($S_1$, $S_2$) comprising means for multiplication (201, 301) phase-synchronised with a local carrier (211, 311), means for time-wise correlation (202, 302) with a local code (212, 312), means for integration (203, 303) of the correlated signal in phase and in time, a carrier NCO numerical control operator (223, 323) able to deliver a local carrier phase for driving the generation of the local carrier (211, 311) and a code NCO numerical control operator (222, 322) able to deliver a time command for driving the generation of the local code (212, 312) and a measurement (204, 304) of the instant of emission by the satellite of the signal received ($S_1$, $S_2$),
**characterized in that** said device furthermore comprises, for each satellite, means for tracking synchronization (400) of the carrier and of the code comprising:

- beam forming means (401) able to deliver, on the basis of the output signals $Z_1$, $Z_2$ of the integration means (203, 303), a unique formed signal Z equal to the sum of the said signals $Z_1$, $Z_2$ weighted by complex weighting coefficients equal to the product of the gain $G_a$, in amplitude and phase, of the associated antenna in the direction of the satellite, taking account of a possible masking of the satellite by the body of the carrier, with a complex corrective gain $G_{BL}$ of the lever arm between the phase centre of the antenna and the centre of symmetry O of the antenna array,

- a code discriminator (402) and a phase discriminator (403) which are applied to the said formed signal Z,

- a code loop corrector (412) applied at the output of the code discriminator (402) and able to deliver a speed correction as input for the code numerical control operators (222, 322),

- a carrier loop corrector (413) applied at the output of the phase discriminator (403) and able to deliver a speed correction as input for the carrier numerical control operators 223, 323),

- means (420) for calculating the average ($T_1$) of the said measurements (204, 304) of the instant of emission, by the satellite, of the signal received ($S_1$, $S_2$).

2. Device for receiving radio-navigation signals according to claim 1, **characterized in that** the receiving antennas are positioned around the circumference of a carrier of substantially cylindrical shape.

3. Device for receiving radio-navigation signals according to any one of claim 1 or claim 2, **characterized in that** the corrective gain $G_{BL}$ of the lever arm is determined by the following calculation $G_{BL} = \exp(j \Delta\varphi_{BL})$, where $\Delta\varphi_{BL} = 2\pi \cdot \Delta L_{BL} / \lambda$ is the phase shift induced by the optical path difference $\Delta L_{BL}$ between the phase centre of the antenna and the centre of symmetry O of the antenna array, $\lambda$ being the wavelength of the carrier of the signal received.

4. Device for receiving radio-navigation signals according to claim 3, **characterized in that** the optical path difference $\Delta L_{BL}$ is determined by projecting the lever arm r onto the view axis (104) between the centre of symmetry O of the antenna array and the satellite.

5. Device for receiving radio-navigation signals according to claim 4, **characterized in that** the coordinates of the lever arm r are determined, in a spatial reference frame fixed with respect to the earth, on the basis of a measurement of the attitude of the carrier.

6. Device for receiving radio-navigation signals according to one of claims 1 to 5, **characterized in that** it furthermore comprises, at the input of each code numerical control operator (222, 322) and of each carrier numerical control operator (223, 323), a speed-wise lever arm corrector (232, 233, 332, 333), which consists in compensating the outputs of the code loop corrector (412) and carrier loop corrector (413) by the temporal derivative of the optical path difference $\Delta L_{BL}$.

FIG.1a

FIG.1b

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010328155 A

**Littérature non-brevet citée dans la description**

- **PATRICK FENTON.** *Using GPS for position & attitude determination of the Canadian space agency's active rocket mission*